Europäisches Patentamt

European Patent Office

Office européen des brevets

(19)

(11) Numéro de publication: **0 201 432**
**A1**

## (12) DEMANDE DE BREVET EUROPEEN

(21) Numéro de dépôt: **86400992.3**

(22) Date de dépôt: **07.05.86**

(51) Int. Cl.⁴: **A01G 13/02**

(30) Priorité: **07.05.85 FR 8506967**

(43) Date de publication de la demande:
**17.12.86 Bulletin 86/46**

(84) Etats contractants désignés:
**AT BE CH DE FR GB IT LI LU NL SE**

(71) Demandeur: **DISPAC S.A.R.L.**
**Z.I. - Corné**
**F-49250 Beaufort en Vallée(FR)**

(72) Inventeur: **Koenig, René**
**2 chemin de la Libération**
**F-49000 Pruniers(FR)**
Inventeur: **Brousse, Christian**
**147 bis quai Paul Bert**
**F-37100 Tours 01(FR)**

(74) Mandataire: **Polus, Camille et al**
**c/o Cabinet Lavoix 2, Place d'Estienne**
**d'Orves**
**F-75441 Paris Cedex 09(FR)**

(54) Dispositif de protection des végétaux contre la gr le et filet destiné à sa fabrication.

(57) L'invention a pour objet un dispositif de protection des végétaux contre la grêle, du type comprenant un filet qui est tendu sur des supports au-dessus des végétaux, caractérisé en ce qu'il comprend au moins un ensemble (22) de fils (23) d'acier inoxydable de faible section qui sont parallèles et maintenus régulièrement espacés de distance en distance par des cordons transversaux (24) de matière plastique, cet ensemble de fils étant tendu sur les supports (9, 17 ; 11, 20) avec une tension suffisante pour empêcher le passage entre les fils des grêlons ayant une taille sensiblement égale ou supérieure à la distance d'écartement des fils (23).

EP 0 201 432 A1

FIG.1

Dispositif de protection des végétaux contre la grêle et filet destiné à sa fabrication

La présente invention concerne un dispositif de protection contre la grêle des végétaux tels que les arbres fruitiers et les légumes.

On connaît déjà des dispositifs de protection des végétaux contre la grêle. Ces dispositifs comprennent des filets tissés ou tricotés à partir de fils en matière plastique, qui sont tendus sur des supports au-dessus des végétaux à protéger.

Ces dispositifs de protection présentent l'inconvénient majeur de réduire de façon importante l'ensoleillement des végétaux protégés en raison de la texture épaisse du filet (qui doit pouvoir résister à une charge de grêle importante).

Cette réduction de l'ensoleillement provoque un moindre grossissement des fruits et légumes protégés et favorise, en raison d'une hygrométrie accrue, l'apparition de maladies, notamment sur les arbres fruitiers.

La présente invention vise à fournir un dispositif de protection des végétaux contre la grêle qui permette de remédier à ces inconvénients.

A cet effet, la présente invention a pour objet un dispositif de protection des végétaux contre la grêle, du type comprenant un filet qui est tendu sur des supports au-dessus des végétaux, caractérisé en ce qu'il comprend au moins un ensemble de fils d'acier inoxydable de faible section (chaîne), qui sont parallèles et maintenus régulièrement espacés de distance en distance par des cordons transversaux de matière plastique (trame), cet ensemble de fils chaîne et trame composant le filet paragrêle étant tendu sur les supports avec une tension suffisante pour empêcher le passage entre les fils, des grêlons ayant une taille sensiblement égale ou supérieure à la distance d'écartement des fils.

Dans la présente invention on utilise de préférence comme fils d'acier inoxydable de faible section des fils de 0,16 à 0,30 mm, bien qu'il soit possible d'utiliser dans certains cas des sections plus faibles (0,12 mm).

La distance d'écartement des fils en acier inoxydable de la chaîne peut être en pratique de 2 à 6 mm, une telle distance empêchant la pénétration des grêlons dont la chute peut être dangereuse pour les végétaux. Elle est de préférence de 3 à 5 mm.

Les cordons transversaux en matière plastique (trame) ont avantageusement un diamètre de 0,5 à 3 mm et sont disposés avec des distances d'écartement qui sont avantageusement de 20 à 150 mm.

L'ensemble du filet paragrêle peut être tendu sur des supports fixés à des poteaux espacés de 5 à 10 mètres/

Les supports ont avantageusement la forme d'arceaux bien que l'on puisse également utiliser des supports en forme de V renversé.

Le filet paragrêle peut être posé sur les supports intermédiaires et tendu au niveau des poteaux de tête et de queue par l'intermediaire de lames de fixation en matière plastique dans lesquelles les fils de chaîne sont noyés.

La tension des filets peut être obtenue notamment en utilisant des poteaux de tête et/ou de queue mobiles autour d'un axe horizontal au niveau du sol et tirés à leur partie supérieure vers l'extérieur par des tendeurs.

Généralement, les végétaux sont plantés suivant plusieurs lignes parallèles et le dispositif de protection selon l'invention comprend plusieurs ensembles de fils tendus, ces ensembles étant disposés de façon parallèle et contiguë en laissant juste entre chaque ensemble un espace libre pour l'écoulement de la grêle.

Les supports contigus sont alors avantageusement conçus de façon à ce qu'un ensemble de fils sur deux, recouvre les lignes de végétaux, et l'espace libre entre les ensembles de fils tendus est réalisé de façon à empêcher la projection des grêlons sur les végétaux.

L'invention est exposée ci-après plus en détail, en se référant aux dessins annexés sur lesquels :

La fig. 1 est une vue en perspective d'un dispositif selon l'invention.

La fig. 2 est une vue en coupe longitudinale d'un dispositif de fixation des filets paragrêle sur des arceaux d'extrémité.

La fig. 3 est une vue en coupe longitudinale d'un dispositif de fixation des filets paragrêle sur des arceaux intermédiaires.

La fig. 4 est une vue schématique en coupe transversale du dispositif de la fig. 1.

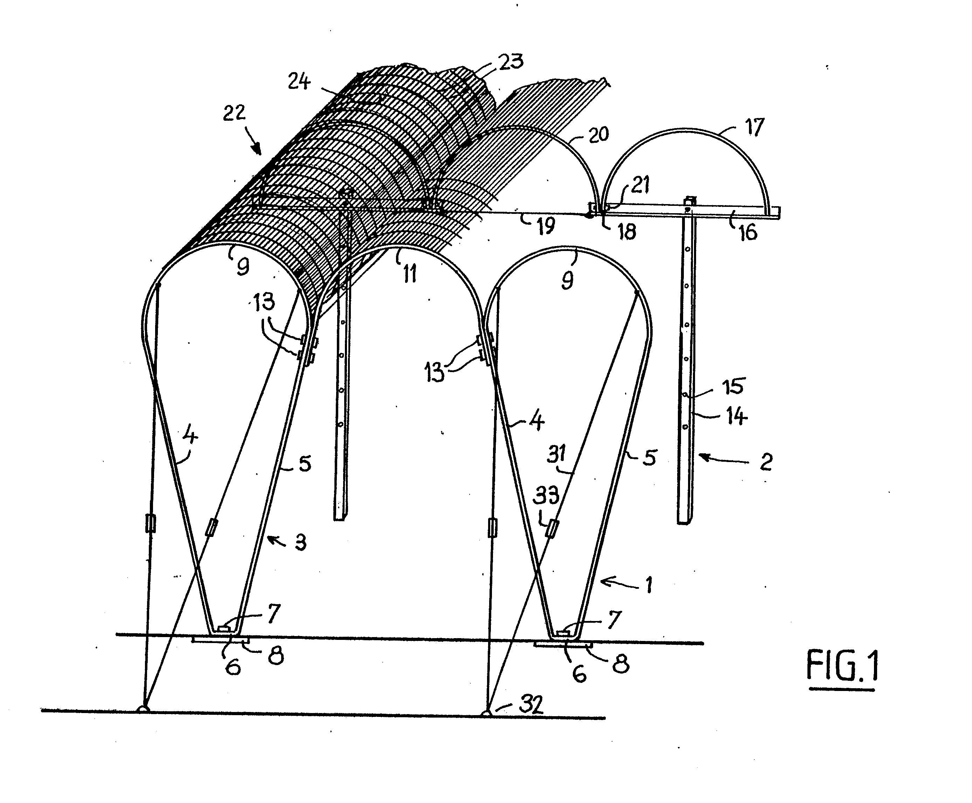

On a représenté sur la figure 1 un ensemble de dispositifs selon l'invention monté dans un champ de cultures disposées en lignes, par exemple un champ d'arbres fruitiers.

Cet ensemble comprend des poteaux de tête et de queue tels que 1 et des séries de poteaux intermédiaires tels que 2.

Les poteaux de tête tels que 1 sont constitués par un ensemble de tubes métalliques cintrés 3 présentant chacun deux bras 4 et 5 en V se raccordant par une courte portion inférieure droite horizontale 6 tourillonnant dans un palier 7 solidaire d'une plaque 8 fixée au sol.

Les deux bras 4 et 5 se raccordent à leur partie supérieure par une portion en forme d'arceau 9.

Deux poteaux de tête adjacents sont liés par un arceau 11 fixé au bras 5 d'un premier poteau et au bras 4 d'un second poteau par des boulons 13.

Les poteaux intermédiaires 2 sont constitués par un ensemble de poteaux verticaux 14 en béton enfoncés dans le sol présentant des évidements 15 pour le passage de fils de fer galvanisé (destinés au palissage des arbres). Chacun de ces poteaux supporte à son sommet une cornière 16 horizontale au voisinage des extrémités de laquelle sont soudées les extrémités 18 d'un arceau 17 en fer rond gaîné plastique.

Un fil de fer tendu 19 relie les extrémités de deux cornières 16 adjacentes tandis que les extrémités d'un arceau 20 en fer plat sont fixées aux extrémités de deux arceaux 17 portés par deux poteaux intermédiaires adjacents par des boulons 21.

Entre les arceaux 9 de deux poteaux de tête et de queue d'une ligne, est tendu un ensemble 22 de fils 23 en acier inoxydable tous parallèles et régulièrement espacés (par exemple de 3 à 4 mm).

Ces fils composant la chaîne sont maintenus régulièrement espacés par des cordons 24 transversaux en matière plastique, composant la trame, disposés tous les 20 à 100 mm. L'ensemble forme un filet 30.

Les techniques prévues pour la réalisation de la trame pourront être du type "grille", soudure sur la chaîne inox par réactivation à chaud, d'une trame en matière plastique, composée soit d'un fil plastique (par exemple kevlar) enduit de matière plastique traité anti U.V., soit d'un fil en inox enduit de matière plastique traité anti U.V. Une autre technique pourra consister en la réalisation d'une trame tissée (et éventuellement collée), en fil plastique.

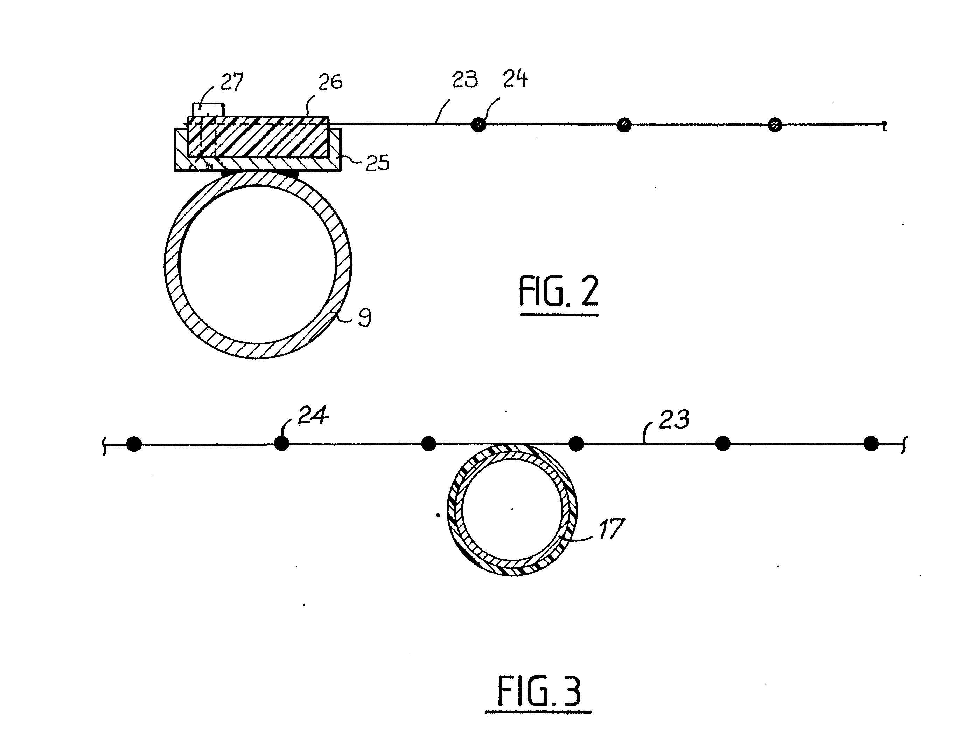

Les fils de chaîne en inox 23 sont fixés sur les arceaux 9 des poteaux d'extrémité, comme représenté sur la fig. 2.

Sur la partie supérieure des arceaux 9 est soudé un profilé courbe, de section en U 25. Dans ce profilé vient s'insérer une baguette 26 de matière plastique de section rectangulaire dans laquelle sont noyées les extrémités des fils de chaîne 23. Des boulons 27 assurent la fixation de la baguette 26 dans le profilé 25.

Les fils 23 s'appuient sur les arceaux 17 des poteaux intermédiaires comme représenté sur la fig. 3.

La mise en place du dispositif ou d'un ensemble des dispositifs selon l'invention a lieu de la façon suivante :

Une fois les poteaux et arceaux d'extrémité et intermédiaires mis en place, une baguette 26 disposée à l'une des extrémités du filet est fixée sur l'arceau 9 du poteau de queue. Le filet 30 est déroulé complètement et la baguette 26 disposée à l'autre extrémité du filet est fixée sur l'arceau 9 du poteau de tête en position non tendu.

Le filet 30 est alors mis sous tension à l'aide de câbles 31 fixés d'une part aux arceaux 9 des poteaux de tête et de queue et à un ancrage 32 dans le sol, par l'intermédiaire de tendeurs 33, jusqu'à ce que les lames 28 se trouvent à l'aplomb des arceaux 17 correspondants.

Dans le cas d'un terrain non parfaitement plat, des poteaux intermédiaires analogues aux poteaux d'extrémité peuvent être prévus pour assurer grâce à des tendeurs intermédiaires une tension correcte des filets 30.

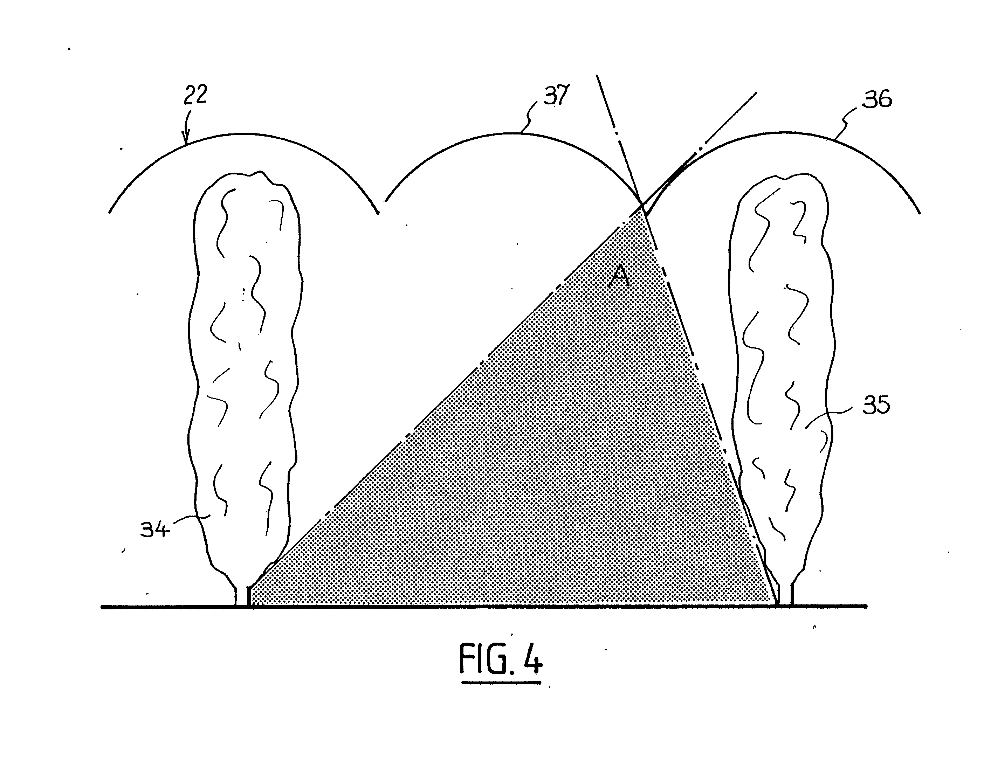

On a représenté schématiquement sur la fig. 4 une coupe du dispositif montrant la disposition des ensembles de fils tendus.

Au-dessus d'un verger comprenant des lignes parallèles 34 et 35 d'arbre fruitiers, un premier ensemble 22 décrit précédemment reposant sur les arceaux d'extrémité 9 et intermédiaires 17, est tendu au-dessus de la ligne 34. Un ensemble 36 analogue à l'ensemble 22 est tendu au-dessus de la ligne 35. Entre les ensembles 22 et 36 est tendu un ensemble 37, reposant sur les arceaux d'extrémité 11 et intermédiaires 20. Les fils d'extrémité de l'ensemble 37 descendent moins bas sur les arceaux que les fils d'extrémité des ensembles 22 et 36 de façon à délimiter un angle A d'entrée des grêlons qui ne pénètre pas le volume des arbres fruitiers.

Les avantages présentés par le dispositif selon l'invention sont les suivants :

-légèreté du filet

-très faible prise au vent comparativement aux filets connus, obtenus par tissage de fils de matière plastique

-très faible diminution de l'ensoleillement compte tenu de la section des fils d'acier inoxydable et de l'espacement des cordons transversaux

-hygrométrie sous le filet pratiquement inchangée

-évacuation de la grêle entre deux dispositifs parallèles contigus

-léger gain de température sous filet en cas de températures négatives

-moindre agressivité des agents atmosphériques perturbants tels que vents et pluies violents

-possibilité de production industrielle en continu du filet utilisé.

**Revendications**

1. Dispositif de protection des végétaux contre la grêle, du type comprenant un filet qui est tendu sur des supports au-dessus des végétaux, caractérisé en ce qu'il comprend au moins un ensemble (22) de fils (23) d'acier inoxydable de faible section qui sont parallèles (chaîne), et maintenus régulièrement espacés de distance en distance par des cordons transversaux (24) de matière plastique (trame), cet ensemble de fils étant tendu sur les supports (9, 17, 11, 20) avec une tension suffisante pour empêcher le passage entre les fils des grêlons ayant une taille sensiblement égale ou supérieure à la distance d'écartement des fils (23).

2. Dispositif selon la revendication 1, caractérisé en ce que les fils (23) d'acier inoxydable ont une section de 0,16 à 0,30 mm.

3. Dispositif selon la revendication 1 ou la revendication 2, caractérisé en ce que la distance d'écartement des fils (23) d'acier inoxydable est de 2 à 6 mm.

4. Dispositif selon l'une quelconque des revendications précédentes, caractérisé en ce que les cordons transversaux (24) ont un diamètre de 0,5 à 3 mm et sont espacés de 20 à 150 mm.

5. Dispositif selon l'une quelconque des revendications précédentes, caractérisé en ce que les supports (9, 17, 11, 20) sont fixés à des poteaux (4, 5; 14), les poteaux de tête et/ou de queue (4, 5) étant mobiles autour d'un axe horizontal et étant tirés à leur partie supérieure vers l'extérieur pour assurer la tension des fils.

6. Dispositif selon l'une quelconque des revendications précédentes, caractérisé en ce qu'il comprend plusieurs ensembles (22, 36, 37) de fils disposés de façon parallèle, un espace libre existant entre deux ensembles pour l'écoulement de la grêle.

7. Dispositif selon la revendication 6, caractérisé en ce que les supports (9, 17 ; 11, 20) sont conçus de façon à ce qu'un ensemble (22) de fils sur deux recouvre les lignes de végétaux et l'espace libre entre les ensembles (22, 37) de fils tendus est réalisé de façon à empêcher la projection des grêlons sur les végétaux.

8. Filet destiné à la fabrication d'un dispositif selon la revendication 1, caractérisé en ce qu'il comprend au moins un ensemble (22) de fils (23) d'acier inoxydable de faible section qui sont parallèles et maintenus régulièrement espacés de distance en distance par des cordons transversaux - (24) de matière plastique.

FIG.1

0 201 432

FIG. 2

FIG. 3

0 201 432

FIG. 4

0 201 432

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A- 469 311 (KORNACKER)<br>* Page 1, lignes 1-9; page 1, ligne 45 - page 2, ligne 43; figures 1-8 * | 1,8 | A 01 G 13/02 |
| A | FR-A-2 214 398 (LE PROFIL)<br>* Page 1, lignes 1-3; page 3, lignes 9-40; figure 1 * | 1,5,6 | |
| A | DE-A-1 918 300 (REINITZHUBER)<br>* Page 3, dernier paragraphe - page 5, dernier paragraphe; figures 1-3 * | 1 | |

DOMAINES TECHNIQUES
RECHERCHES (Int. Cl.4)

A 01 G

Le présent rapport de recherche a été établi pour toutes les revendications

| Lieu de la recherche | Date d'achèvement de la recherche | Examinateur |
|---|---|---|
| LA HAYE | 13-08-1986 | HERYGERS J.J. |